# EUROPEAN PATENT SPECIFICATION

(11) **EP 4 534 591 B1**
(45) Date of publication and mention of the grant of the patent: **28.01.2026**
(21) Application number: 24188208.3
(22) Date of filing: 12.07.2024
(51) Int. Cl.: C08J 11/10

(54) **PROCESS FOR DEPOLYMERIZING POLYESTER SUBSTRATES USING MICROWAVE-ASSISTED ENZYMATIC ACTION**
VERFAHREN ZUR DEPOLYMERISIERUNG VON POLYESTERSUBSTRATEN MIT MIKROWELLENUNTERSTÜTZTER ENZYMATISCHER WIRKUNG
PROCÉDÉ DE DÉPOLYMÉRISATION DE SUBSTRATS EN POLYESTER À L'AIDE D'UNE ACTION ENZYMATIQUE ASSISTÉE PAR MICRO-ONDES

(30) Priority: 14.07.2023 EP 23185583
(43) Date of publication of application: 09.04.2025
(73) Proprietor: CycleZyme AB, 223 63 Lund (SE)
(72) Inventor: Falck, Peter, 24491 Kävlinge (SE); Linares-Pastén, Javier Antonino, 22642 Lund (SE)
(74) Representative: Høiberg P/S

(56) References cited:
- WO-A1-2022/104442
- DATABASE MEDLINE [online] US NATIONAL LIBRARY OF MEDICINE (NLM), BETHESDA, MD, US; 29 December 2021 (2021-12-29), ATTALLAH OLIVIA A ET AL: "Progressing Ultragreen, Energy-Efficient Biobased Depolymerization of Poly(ethylene terephthalate) via Microwave-Assisted Green Deep Eutectic Solvent and Enzymatic Treatment.", XP002810515, Database accession no. NLM35012131
- GUO BOYANG ET AL: "Fast Depolymerization of PET Bottle Mediated by Microwave Pre-Treatment and An Engineered PETase**", CHEMSUSCHEM, vol. 16, no. 18, 29 June 2023 (2023-06-29), DE, XP093103779, ISSN: 1864-5631, DOI: 10.1002/cssc.202300742

## Description

### Background

Polyethylene terephthalate (PET) is a widely used polyester in various industries, including packaging, textiles, and consumer goods. However, the disposal of PET waste poses significant environmental challenges due to its non-biodegradable nature. Various approaches have been explored to address this issue, including mechanical recycling and chemical depolymerization methods.

Mechanical recycling involves grinding PET waste into flakes or pellets, followed by melting and reprocessing into new products. While this approach can recover the material, it is limited by the loss of polymer properties and the presence of impurities, leading to decreased quality in the recycled products.

Chemical depolymerization techniques have also been investigated to break down PET into its monomeric components for subsequent reuse. Conventional chemical methods typically involve the use of strong acids or bases at high temperatures, which can be energy-intensive and environmentally unfriendly. These methods also suffer from selectivity issues and often result inside reactions and undesirable by-products.

Enzymatic depolymerization has emerged as a promising alternative for the sustainable and selective degradation of PET. Enzymes, such as cutinases and PETases, have shown remarkable capabilities in cleaving the ester linkages present in the PET polymer chain. These enzymes offer the advantage of high specificity, mild reaction conditions, and the potential for achieving high purity monomers.

Current enzymatic depolymerization methods for PET, however, face certain challenges that hinder their industrial applicability. One major limitation is the slow reaction rate, which can lead to longer processing times and increased costs. Additionally, the thermal stability of enzymes can be compromised at elevated temperatures, limiting their activity and efficiency. In the field of enzymatic depolymerization of PET, notable advancements have been made, such as the patented process described in US11377533B2 by Carbios. This process involves an amorphization step prior to enzymatic depolymerization to enhance the accessibility of PET to the enzymes. While the Carbios method demonstrates effective PET depolymerization, it requires additional processing steps and can be energy demanding. Furthermore, the use of heat as a pretreatment in traditional processes can lead to the destruction of other components present in textile waste, such as cellulose. Thus, there is a need for an improved approach that simplifies the depolymerization process, reduces energy consumption, and ensures the preservation of valuable components in the waste stream.

WO 2022/104442 A1 discloses a process for enzymatic depolymerizing of a polyester substrate preceded by a microwave pre-treatment of the polyester.

### Summary

To address these limitations to currently known depolymerization processes set out above, there is a need for an improved enzymatic depolymerization process that enhances the reaction rate, maintains enzyme stability, and provides a practical and eco-friendly solution for PET waste management.

The present invention aims to overcome these challenges by introducing a novel process that combines microwave irradiation and enzymatic depolymerization. The incorporation of microwaves selectively heats the PET substrate and thermostable enzyme, accelerating the depolymerization reaction rate while maintaining enzyme stability within a controlled temperature range. This innovative approach offers the potential for efficient and cost-effective PET depolymerization, thereby contributing to the circular economy and sustainable waste management practices.

The present invention discloses a process for efficiently depolymerizing plastic polyester substrates using a combination of enzymatic degradation and microwave irradiation. This innovative approach enables the selective breakdown of polyester linkages while minimizing energy consumption and preserving valuable components in the waste stream.

Thus, one aspect of the present disclosure provides for a process for depolymerizing a polyester substrate, said process comprising:
a. mixing the polyester substrate, an enzyme capable of depolymerizing polyester linkages, and a solvent, wherein the enzyme is selected from the group consisting of a cutinase and a PETase, and
b. heating the mixture by means of microwave irradiation,
thereby depolymerizing the polyester substrate.

The invention is defined by the claims. Any subject matter falling outside the scope of the claims is provided for information purposes only.

### Detailed description

One embodiment of the present disclosure provides for a process for depolymerizing a polyester substrate, said process comprising:
a. mixing the polyester substrate, an enzyme capable of depolymerizing polyester linkages, and a solvent, wherein the enzyme is selected from the group consisting of a cutinase and a PETase, and
b. heating the mixture by means of microwave irradiation,
thereby depolymerizing the polyester substrate.

### Polyester substrate

The process is applicable to a wide range of plastic polyester substrates available on the market, including but not limited to polyethylene terephthalate (PET), polyethylene terephthalate glycol (PETG), and other commonly used plastic polyesters. These substrates find widespread use in packaging, textiles, and other industries.

In one embodiment, the polyester substrate is selected from the group consisting of polyethylene terephthalate (PET), polyethylene terephthalate glycol (PETG), and other plastic polyesters. In one embodiment, the polyester substrate is in the form of a powder.

In one embodiment of the present disclosure the polyester substrate is selected from the group consisting of polyethylene terephthalate (PET), polyethylene terephthalate glycol (PETG), semi-crystalline polyesters, such as polyethylene terephthalate (PET), polytrimethylene terephthalate (PTT), polybutylene terephthalate (PBT), polyethylene isosorbide terephthalate (PEIT), polylactic acid (PLA), polyhydroxy alkanoate (PHA), polybutylene succinate (PBS), polybutylene succinate adipate (PBSA), polybutylene adipate terephthalate (PBAT), polyethylene furanoate (PEF), polycaprolactone (PCL), poly(ethylene adipate) (PEA), polybutylene succinate terephthalate (PBST), polyethylene succinate (PES), poly(butylene succinate/terephthalate/isophthalate)-co-(lactate) (PBSTIL), and blends/mixtures of these materials.

In one embodiment, the disclosed process also allows for the depolymerization of mixed substrates that contain other polymers, such as polyolefins, vinyl polymers, orthophthalaldehyde polymer (OPA), polychlorotrifluoroethylene (PCTFE), rubber, metal compounds, mineral compounds, glass compounds, natural or synthetic fibers, paper, wood, composites wood such as lignin, cellulose or hemicellulose, starch and its derivatives. This allows for the efficient processing of diverse plastic waste streams, enabling the recovery and recycling of valuable materials.

### Enzyme Selection

Various enzymes capable of depolymerizing polyester linkages can be employed in the process. Known cutinases and PETases, including bacterial (example, *Ideonella skaiensis* IsPETase) leaf-branch compost cutinase (LCC) (Sulaiman 2012, Proteins Data Bank accession code 4EB0), marine PETase (PET2) (Wagner-Egea 2023), and fungal meso- and thermostable cutinases such as HiCut (or HiC) from Humicola insolens (Aristizábal-Lanza 2022), have demonstrated promising depolymerization capabilities. These enzymes, derived from different microbial sources, offer high specificity and efficient degradation of polyester chains. In one embodiment, the enzyme of the disclosure is capable of depolymerizing polyester linkages. In one embodiment, the enzyme capable of depolymerizing polyester linkages is selected from the group consisting of a cutinase and a PETase.

In one embodiment, the cutinase is selected from the group consisting of ideonella cutinases/PETases, mesostable cutinases/PETases, thermostable cutinases/PETases: PET2, HiC, LCC, and LCC variants, e.g. those disclosed in WO 2022/043545.

In one embodiment, the cutinase is *Humicola insolens* cutinase or PET2 Marine cutinase, LCC, or a LCC variant such as those disclosed in WO 2022/043545.

### Reaction parameters

The reaction conditions are controlled to optimize depolymerization while maintaining enzyme stability. In one embodiment, the reaction temperature is maintained within a range close to the glass transition temperature (Tg) of the specific polyester substrate being processed. In a preferred embodiment, the reaction temperature is maintained within a range close to the optimal enzyme temperature. The present inventors have found that this temperature range, typically between 20 to 80 degrees Celsius, when combined with the microwave irradiation, ensures efficient depolymerization without compromising enzyme activity or denaturation. In one embodiment, the temperature is between 20 and 80 degrees Celsius. In one embodiment, the temperature is between 40 and 80 degrees Celsius.

### Microwave Irradiation

Microwave irradiation is selectively applied to the reaction mixture to facilitate the depolymerization process. In one embodiment, the microwave wavelength employed is chosen to be close to the absorption wavelength of the polyester substrate. In one embodiment, the microwave power employed is chosen to be close to the optimal enzyme temperature. In one embodiment, the temperature is kept substantially constant through the depolymerization process. These aspects enable preferential heating of the substrate, enhancing the reaction rate and overall efficiency. Different wavelengths and/or powers can be utilized based on the specific polyester being processed and its corresponding absorption properties.

In one embodiment, the wavelength of the microwave irradiation coincides with the absorption wavelength of the polyester substrate. In one embodiment, the power of the microwave irradiation absorption is effect for the polyester substrate. In one embodiment, the microwave irradiation is performed at a wavelength ranging from 1 mm to 100 cm, more preferably 1 cm to 50 cm, more preferably 2 cm to 10 cm. In one embodiment, the microwave irradiation is performed in a range of 40 to 120 Watts (W).

In one embodiment, the microwave irradiation is performed at a power range of 1-1000 W per ml mixture, such as 1 to 5 W per ml mixture, 5 to 10 W per ml mixture, 10 to 35 W per ml mixture, 35 to 65 W per ml mixture, 65 to 80 W per ml mixture, 80 to 100 W per ml mixture, 100 to 200 W per ml mixture, 200 to 500 W per ml mixture, and/or 500 to 1000 W per ml mixture.

In one embodiment of the disclosure, the microwave irradiation is performed at a power range of 1-1000 W, such as 1-120 W, such as 5 to 100 W, such as 10 to 80 W, such as 35 to 65 W.

### pH, Temperature, and reaction time

The enzymatic activity and depolymerization efficiency are influenced by the pH and temperature of the mixture. The pH is maintained within an optimal range for the selected enzyme, typically through the addition of appropriate buffers or adjusting the reaction medium. Temperature is selected such that enzyme denaturation is minimized, whiles still promoting efficient depolymerization. Monitoring and controlling both pH and temperature throughout the reaction process assists in providing optimal conditions for enzyme activity and reaction kinetics.

By combining enzymatic degradation with microwave irradiation and carefully controlling reaction conditions, the present invention provides an effective and sustainable process for the depolymerization of plastic polyester substrates. This approach offers advantages such as improved reaction rates, reduced energy consumption, and the preservation of valuable components, making it a valuable contribution to the field of polyester waste management. In one embodiment of the disclosure, the pH of the mixture is maintained within 5.0-11.0, such as within 6.0 to 10.5, such as within 6.5 to 10.0, for example 7.5 or 9.0

In one embodiment, the mixture is heated to a temperature that is within ±20 °C of the transition temperature (Tg) of the polyester substrate, such as within ±18 °C, ±16 °C, ±14 °C, ±12 °C, ±10 °C, ±8 °C, ±6 °C, or ±4 °C of the transition temperature of the polyester substrate.

In one embodiment, the mixture is heated to between 15 and 80 °C, 15-20 °C, 20-30 °C, 30-40 °C, 40-50 °C, 50-60 °C, 60-70 °C, and/or 70-80 °C. In one embodiment, the mixture is heated to between 40 and 80 °C, such as 40-50 °C, 50-60 °C, 60-70 °C, and/or 70-80 °C.

In one embodiment, the mixture is heated for 1 to 200 hours, such as for 10 to 150 hours, such as for 20 to 100 hours, such as for 25 to 90 hours. In one embodiment, the mixture is continuously heated for 1 to 3 hours, but discontinuously heated for up to 200 hours or more, such as for 10 to 150 hours, such as for 20 to 100 hours, such as for 25 to 90 hours.

The depolymerization progress may be monitored using any suitable method known in the art, for example HPLC-UV. In one embodiment, the mixture is heated until at least 90 % of the polyester substrate has been depolymerized, as assessed by HPLC-UV.

### Solvent

In one embodiment, the solvent is an aqueous solvent. In one embodiment, the solvent comprises a buffer, such as tris(hydroxymethyl)aminomethane (TRIS), glycine, and/or NaOH. In one embodiment, the solvent comprises a aprotic, polar solvent, such as dimethyl sulfoxide (DMSO). In one embodiment, the solvent comprises 1-20 % DMSO.

The presence of the buffer (salt) may contribute significantly to microwave heating because of its interactions with the electromagnetic field. The solvent may have an ionic strength from 10 mM to 1000 mM. The optimal ionic strength can depend on the polyester type and enzyme optimal activity.

### Preparation of polyester substrate and further use

The polyester substrate of the present disclosure may be prepared as shown in the Examples, or by any other suitable method. Preferably, the polyester substrate is in the form of a powder, and substantially free from contaminants. To achieve this, the polyester substrate can be washed using suitable detergents or solvents, either before or after the polyester is grinded or milled.

Thus, in one embodiment, the process of the disclosure further comprising a step of preparing the polyester substrate by:
a. providing a polyester,
b. optionally cleaning the polyester by washing with a detergent and/or water,
c. grinding or milling the polyester to reduce the particle size to obtained particles of polyester, and
d. optionally washing the particles of polyester with an organic solvent, such as ethanol or methanol,
thereby obtaining the polyester substrate.

The depolymerized polyester substrate can be used in further applications. Thus, in one embodiment, the process of the disclosure further comprises a step of converting the depolymerized polyester substrate into a further product.

### Examples: Materials and methods

### Analysis

The products resulting from the microwave-assisted enzymatic degradation of the polyester substrates, specifically terephthalic acid (TPA), were analyzed using an HPLC (High-Performance Liquid Chromatography) method. The following details outline the specific equipment, column, eluents, sample preparation, standard curve, and updated parameters for the analysis:
HPLC Equipment:
   High-performance liquid chromatography (HPLC) system
HPLC Column:
   Kinetex^{®} 1.7 µm XB-C18 100 Å, LC Column with dimensions of 50 × 2.1 mm.
Eluents:
   Mobile Phase A: 80% aqueous solution containing 0.1% formic acid.
   Mobile Phase B: 20% acetonitrile.

### Sample Preparation:

Prepare 200 µl of filtered dimethyl sulfoxide (DMSO) and 500 µl of the filtered sample (derived from the microwave-assisted enzymatic degradation) in separate HPLC/UPLC vials. Filtration of the samples is crucial to remove any particulate matter or impurities that may interfere with the HPLC analysis.

### Standard Curve:

Prepare a stock solution of TPA by dissolving 83.07 mg of TPA in an appropriate volume of DMSO to achieve a concentration of 100 mM.

From the TPA stock solution, prepare a series of concentrations ranging from 0.1 to 10 mM of TPA. These concentrations will be used to construct a standard curve for quantification.

### HPLC Analysis:

Set up the HPLC system with the appropriate method parameters, including column temperature, flow rate, and gradient conditions.

Inject the prepared sample (200 µl) and the TPA standard solutions (1 µl injection volume) into the HPLC system.

Perform chromatographic separation using the specified column and eluent gradient (Mobile Phase A and Mobile Phase B).

Detect and quantify the TPA peaks at a wavelength of 260 nm, using an appropriate detector. Set the flow rate at 0.4 mL/min for a 3-minute analysis per sample.

The HPLC method described above enables the accurate analysis of terephthalic acid (TPA) released during the microwave-assisted enzymatic degradation of the polyester substrates. The use of a specific column, appropriate eluents, optimized flow rate, injection volume, and the detection wavelength at 260 nm allows for reliable quantification of TPA, aiding in the evaluation of the depolymerization efficiency.

### PET pretreatment:

Polyethylene terephthalate (PET) was prepared in a powder form to serve as the plastic polyester substrate for the depolymerization process. The substrate was obtained by following a procedure similar to that described by Wagner-Egea et al. in 2021.

To prepare the PET substrate, the following steps were carried out:
PET flakes or solid PET material were obtained from a reliable source. The PET material used may be in the form of waste plastic, such as bottles or other PET-based products.

The PET material was thoroughly cleaned to remove any contaminants or impurities. This cleaning process involved washing the PET material with suitable detergents and rinsing it with water to ensure the removal of any residual substances.

After the cleaning process, the PET material was dried to eliminate moisture. Various drying techniques can be employed, such as air drying, vacuum drying, or using a drying oven, depending on the desired outcome and availability of equipment.

The dried PET material was then subjected to a grinding or milling process to reduce its size and achieve a powdered form. This grinding process can be performed using suitable equipment such as a grinder, mill, or pulverizer. The objective was to obtain a fine powder with a consistent particle size suitable for subsequent experimental procedures.

To ensure the suitability of the PET powder for the depolymerization process, the powder was further treated using organic solvents. These solvents, such as methanol or ethanol, were selected to dissolve any remaining impurities or contaminants that might affect the depolymerization efficiency. The PET powder was soaked or treated with the organic solvents for a period, followed by filtration or centrifugation to separate the solvent-extracted PET powder from the solvent solution.

The solvent-extracted PET powder was then thoroughly dried to remove any residual solvents, ensuring the powder was free from moisture and ready for subsequent use in the depolymerization experiments.

By following the above-described preparation steps, the plastic polyester substrate, specifically polyethylene terephthalate (PET), was successfully prepared in powder form, providing an ideal starting material for the subsequent enzymatic depolymerization process.

### Example 1: Microwave assisted PET2 marine PET depolymerization

Reactions were performed to demonstrate the effectiveness of the process for depolymerizing the plastic polyester substrate using enzymatic degradation and microwave irradiation. The following experimental details were employed:
20 mg of the plastic polyester substrate was soaked in 2 mL of a 50 mM buffer containing glycine/NaOH with a pH of 9. The reaction mixture also contained 10% (v/v) dimethyl sulfoxide (DMSO) to enhance substrate solubility, and 0.7 g/L of Cut5b, a marine cutinase known for its effectiveness in depolymerizing polyethylene terephthalate (PET).

Triplicate reactions were set up to ensure the reproducibility of the results. Additionally, a negative control was included for each enzyme, consisting of the complete reaction mixture without the addition of the enzyme. This control was essential for assessing the contribution of the enzyme to the depolymerization process.

The reactions were incubated for a duration of 1 hour at a constant temperature of 40°C. The microwave irradiation was applied at a power of 40 watts.

To halt the reactions, the reaction tubes were cooled or subjected to a freezing process, such as placing them in an ice bath or a freezer set at an appropriate temperature, depending on the desired experimental conditions.

The experimental results demonstrated the efficacy of the process for depolymerizing the plastic polyester substrate under the specified conditions. The comparison with the negative control samples further confirmed the significant contribution of the combined treatment using Cut5b enzyme and microwave treatment to the depolymerization process.

### Example 2: Microwave assisted HiCut (Humicola insolens cutinase) PET depolymerization

20 mg of the plastic polyester substrate was soaked in 2 mL of a 1 M Tris-HCl buffer with a pH of 7.5. The reaction mixture also contained 10% (v/v) dimethyl sulfoxide (DMSO) to enhance substrate solubility, and 0.085 mg/mL of the selected enzyme.

Triplicate reactions were set up, including a negative control consisting of the reaction mixture without the enzyme. This allowed for a comparative evaluation of depolymerization efficiency.

The reactions were incubated for a duration of 1 hour, maintaining a temperature range of 60 to 70 °C, which was close to the glass transition temperature (Tg) of the plastic polyester substrate. Two different microwave power levels, specifically 40 and 60 watts, were applied during the incubation period to study their impact on the depolymerization process.

To halt the reactions, the reaction tubes were frozen by frizzing at -20°C. This step ensured the preservation of the reaction mixture for subsequent analysis and evaluation.

### Example 3. Microwave assisted LCC-CycleZyme-variant PET depolymerization

The reaction mixtures consisted of: buffer 1 M glycine / NaOH, pH 9; 20 mg of no pretreated PET packaging piece as a substrate; and 0.06 g/L LCC or LCC CycleZyme-variant (Sulaiman 2012).

The reaction settings were 1 h at 40 or 60 °C with 300 rpm stirring, and a irradiation power in a range from 30 to 70 W. All reactions were performed in triplicates.

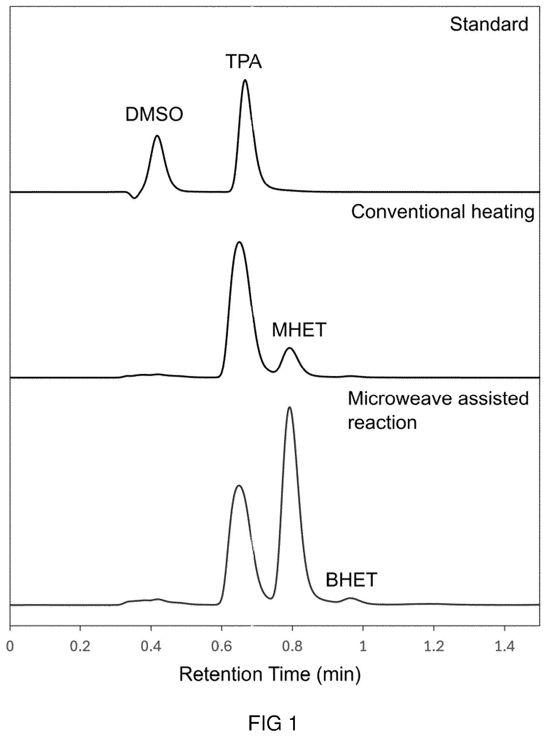

Figure 1 shows a comparison of chromatograms of PET depolymerization products under conventional heating and microwave assisted (70W) reactions using LCC-CycleZyme-variant. The reactions temperatures are 60°C for one hour.

### Results

The experimental results demonstrated that the process combining enzymatic degradation and microwave irradiation at 60 to 70 °C and powers of 40 and 60 watts effectively depolymerized the plastic polyester substrates, as evidenced by the observed changes in polymer properties compared to the negative control.

The microwave-assisted enzymatic degradation experiments were performed using different enzyme variants and microwave power settings. The results obtained for the concentration of terephthalic acid (TPA) and the corresponding time to reach 90% degradation are presented below:
HiCut 50W:
   Pretreated PET
   Concentration of TPA: 0.2 mM/hour
   Time to reach 90% degradation: 75 hours
HiCut 40W:
   Pretreated PET
   Concentration of TPA: 0.5 mM/hour
   Time to reach 90% depolymerization: 31 hours
PET2 60W:
   Pretreated PET
   Concentration of TPA: 0.3 mM/hour
   Time to reach 90% depolymerization: 53 hours
LCC-CycleZyme-variant 70W:
   PET without any type of pretreatment
   Concentration of TPA: 0.9 mM/hour
   Time to reach 90% depolymerization:
      These results indicate the efficiency of the microwave-assisted enzymatic degradation process in depolymerizing the polyester substrates. The concentration of TPA released serves as a measure of the depolymerization progress, with higher concentrations indicating greater degradation. The time to reach 90% degradation provides insight into the kinetics of the process, with shorter times indicating faster degradation rates.

The experimental results demonstrate that HiCut 40W exhibited the highest concentration of TPA at 0.527 mM, achieving 90% degradation in 31 hours. HiCut 50W showed a slightly lower concentration of TPA at 0.222 mM, reaching 90% degradation in 75 hours. Cut5b 60W demonstrated an intermediate concentration of TPA at 0.317 mM, requiring 53 hours to achieve 90% degradation.

These findings highlight the influence of both enzyme variant and microwave power settings on the depolymerization efficiency of the polyester substrates. The results provide valuable information for optimizing the conditions of the microwave-assisted enzymatic degradation process, leading to improved degradation rates and higher concentrations of TPA.

### References

Sulaiman, S., You, D. J., Eiko, K., Koga, Y., & Kanaya, S. (2012). Crystal structure of Leaf-branch compost bacterial cutinase homolog. Proteins Data Bank, accession code 4EB0
Wagner-Egea, P., Aristizábal-Lanza, L., Tullberg, C., Wang, P., Bernfur, K., Grey, C., Zhang, Baozhong, & Linares-Pastén, J. A. (2023). Marine PET Hydrolase (PET2): Assessment of Terephthalate-and Indole-Based Polyester Depolymerization. Catalysts, 13(9), 1234.
Wagner-Egea, P., Tosi, V., Wang, P., Grey, C., Zhang, B., & Linares-Pastén, J. A. (2021). Assessment of Is PETase-Assisted Depolymerization of Terephthalate Aromatic Polyesters and the Effect of the Thioredoxin Fusion Domain. Applied Sciences, 11(18), 8315.
Aristizábal-Lanza, L., Mankar, S. V., Tullberg, C., Zhang, B., & Linares-Pastén, J. A. (2022). Comparison of the enzymatic depolymerization of polyethylene terephthalate and AkestraTM using Humicola insolens cutinase. Frontiers in Chemical Engineering, 4, 1048744.
Thioredoxin Fusion Domain. Applied Sciences, 11(18), 8315.
Aristizábal-Lanza, L., Mankar, S. V., Tullberg, C., Zhang, B., & Linares-Pastén, J. A. (2022). Comparison of the enzymatic depolymerization of polyethylene terephthalate and AkestraTM using Humicola insolens cutinase. Frontiers in Chemical Engineering, 4, 1048744.

## Claims

1. A process for depolymerizing a polyester substrate, said process comprising:
a. mixing the polyester substrate, an enzyme capable of depolymerizing polyester linkages, and a solvent, and
b. heating the mixture by means of microwave irradiation,
thereby depolymerizing the polyester substrate.

2. The process according to claim 1, where the enzyme capable of depolymerizing polyester linkages is selected from the group consisting of a cutinase and a PETase.

3. The process according to any one of the preceding claims, wherein the polyester substrate is selected from the group consisting of polyethylene terephthalate (PET), polyethylene terephthalate glycol (PETG), and other plastic polyesters.

4. The process according to any one of the preceding claims, wherein the polyester substrate is in the form of a powder.

5. The process according to any one of the preceding claims, wherein the mixture is heated to a temperature that is within ±20 °C of the transition temperature (Tg) of the polyester substrate, such as within ±18 °C, ±16 °C, ±14 °C, ±12 °C, ±10 °C, ±8 °C, ±6 °C, or ±4 °C of the transition temperature of the polyester substrate.

6. The process according to any one of the preceding claims, wherein the cutinase is selected from the group consisting of ideonella cutinases and thermostable cutinases.

7. The process according to any one of the preceding claims, wherein the cutinase is *Humicola insolens* cutinase or PET2 Marine cutinase.

8. The process according to any one of the preceding claims, wherein the mixture is heated to between 15 and 80 °C, such as 15-20 °C, 20-30 °C, 30-40 °C, 40-50 °C, 50-60 °C, 60-70 °C, and/or 70-80 °C

9. The process according to any one of the preceding claims, wherein the wavelength of the microwave irradiation coincides with the absorption wavelength of the polyester substrate.

10. The process according to any one of the preceding claims, wherein the microwave irradiation is performed at a wavelength ranging from 1 mm to 100 cm, more preferably 1 cm to 50 cm, more preferably 2 cm to 10 cm.

11. The process according to any one of the preceding claims, wherein the microwave irradiation is performed at a power range of 1-1000 W, such as 5 to 100 W, such as 10 to 80 W, such as 35 to 65 W.

12. The process according to any one of the preceding claims, wherein:
a. the solvent is an aqueous solvent,
b. the solvent comprises a buffer, such as tris(hydroxymethyl)aminomethane (TRIS), glycine, and/or NaOH, and/or
c. the solvent comprises a aprotic, polar solvent, such as DMSO, such as 1-20 % DMSO.

13. The process according to any one of the preceding claims, wherein the pH of the mixture is maintained within 5.0-11.0, such as within 6.0 to 10.5, such as within 6.5 to 10.0, for example 7.5 or 9.0.

14. The process according to any one of the preceding claims, wherein the mixture is heated for 1 to 200 hours, such as for 10 to 150 hours, such as for 20 to 100 hours, such as for 25 to 90 hours.

15. The process according to any one of the preceding claims, further comprising a step of preparing the polyester substrate by:
a. providing a polyester,
b. optionally cleaning the polyester by washing with a detergent and/or water,
c. grinding or milling the polyester to reduce the particle size to obtained particles of polyester, and
d. optionally washing the particles of polyester with an organic solvent, such as ethanol or methanol,
thereby obtaining the polyester substrate.

## Patentansprüche

1. Verfahren zur Depolymerisierung eines Polyestersubstrats, wobei das Verfahren Folgendes umfasst:
a. Mischen des Polyestersubstrats, eines Enzyms, das in der Lage ist, Polyesterbindungen zu depolymerisieren, und eines Lösungsmittels und
b. Erwärmen der Mischung durch Mikrowellenbestrahlung,
wodurch das Polyestersubstrat depolymerisiert wird.

2. Verfahren nach Anspruch 1, wobei das Enzym, das in der Lage ist, Polyesterbindungen zu depolymerisieren, ausgewählt ist aus der Gruppe, bestehend aus einer Cutinase und einer PETase.

3. Verfahren nach einem der vorhergehenden Ansprüche, wobei das Polyestersubstrat ausgewählt ist aus der Gruppe, bestehend aus Polyethylenterephthalat (PET), Polyethylenterephthalatglykol (PETG) und anderen Kunststoffpolyestern.

4. Verfahren nach einem der vorhergehenden Ansprüche, wobei das Polyestersubstrat in Form eines Pulvers vorliegt.

5. Verfahren nach einem der vorhergehenden Ansprüche, wobei die Mischung auf eine Temperatur erwärmt wird, die innerhalb von ±20 °C der Übergangstemperatur (Tg) des Polyestersubstrats liegt, wie innerhalb von ±18 °C, ±16 °C, ±14 °C, ±12 °C, ±10 °C, ±8 °C, ±6 °C oder ±4 °C der Übergangstemperatur des Polyestersubstrats.

6. Verfahren nach einem der vorhergehenden Ansprüche, wobei die Cutinase ausgewählt ist aus der Gruppe, bestehend aus Ideonella-Cutinasen und thermostabilen Cutinasen.

7. Verfahren nach einem der vorhergehenden Ansprüche, wobei es sich bei der Cutinase um Cutinase von *Humicola insolens* oder PET2-Marine-Cutinase handelt.

8. Verfahren nach einem der vorhergehenden Ansprüche, wobei die Mischung auf eine Temperatur zwischen 15 und 80 °C, wie 15-20 °C, 20-30 °C, 30-40 °C, 40-50 °C, 50-60 °C, 60-70 °C und/oder 70-80 °C, erwärmt wird.

9. Verfahren nach einem der vorhergehenden Ansprüche, wobei die Wellenlänge der Mikrowellenbestrahlung mit der Absorptionswellenlänge des Polyestersubstrats übereinstimmt.

10. Verfahren nach einem der vorhergehenden Ansprüche, wobei die Mikrowellenbestrahlung bei einer Wellenlänge im Bereich von 1 mm bis 100 cm, besonders bevorzugt 1 cm bis 50 cm, besonders bevorzugt 2 cm bis 10 cm durchgeführt wird.

11. Verfahren nach einem der vorhergehenden Ansprüche, wobei die Mikrowellenbestrahlung in einem Leistungsbereich von 1-1000 W, wie 5 bis 100 W, wie 10 bis 80 W, wie 35 bis 65 W, durchgeführt wird.

12. Verfahren nach einem der vorhergehenden Ansprüche, wobei:
a. das Lösungsmittel ein wässriges Lösungsmittel ist,
b. das Lösungsmittel einen Puffer, wie Tris(hydroxymethyl)aminomethan (TRIS), Glycin und/oder NaOH, umfasst und/oder
c. das Lösungsmittel ein aprotisches, polares Lösungsmittel, wie DMSO, wie 1-20 % DMSO, umfasst.

13. Verfahren nach einem der vorhergehenden Ansprüche, wobei der pH-Wert der Mischung innerhalb von 5,0-11,0, wie innerhalb von 6,0 bis 10,5, wie innerhalb von 6,5 bis 10,0, wie bei 7,5 oder 9,0, gehalten wird.

14. Verfahren nach einem der vorhergehenden Ansprüche, wobei die Mischung 1 bis 200 Stunden lang erwärmt wird, wie 10 bis 150 Stunden lang, wie 20 bis 100 Stunden lang, wie 25 bis 90 Stunden lang.

15. Verfahren nach einem der vorhergehenden Ansprüche, ferner umfassend einen Schritt des Vorbereitens des Polyestersubstrats durch:
a. Bereitstellen eines Polyesters,
b. gegebenenfalls Reinigen des Polyesters durch Waschen mit einem Waschmittel und/oder Wasser,
c. Verreiben oder Vermahlen des Polyesters zum Reduzieren der Partikelgröße zum erhalten von Polyesterpartikeln und
d. gegebenenfalls Waschen der Polyesterpartikel mit einem organischen Lösungsmittel, wie Ethanol oder Methanol,
wodurch das Polyestersubstrat erhalten wird.

## Revendications

1. Procédé de dépolymérisation d'un substrat en polyester, ledit procédé comprenant :
a. le mélange du substrat en polyester, d'une enzyme capable de dépolymériser les liaisons polyester et d'un solvant, et
b. le chauffage du mélange au moyen d'une irradiation micro-ondes,
entraînant la dépolymérisation du substrat en polyester.

2. Procédé selon la revendication 1, où l'enzyme capable de dépolymériser les liaisons polyester est choisie dans le groupe constitué d'une cutinase et d'une PETase.

3. Procédé selon l'une quelconque des revendications précédentes, dans lequel le substrat en polyester est choisi dans le groupe constitué de polyéthylène téréphtalate (PET), de polyéthylène téréphtalate glycol (PETG) et d'autres polyesters plastiques.

4. Procédé selon l'une quelconque des revendications précédentes, dans lequel le substrat en polyester est sous forme de poudre.

5. Procédé selon l'une quelconque des revendications précédentes, dans lequel le mélange est chauffé à une température se situant à ±20 °C de la température de transition (Tg) du substrat en polyester, telle qu'à ±18 °C, ±16 °C, ±14 °C, ±12 °C, ±10 °C, ±8 °C, ±6 °C ou ±4 °C de la température de transition du substrat en polyester.

6. Procédé selon l'une quelconque des revendications précédentes, dans lequel la cutinase est choisie dans le groupe constitué des cutinases d'Ideonella et des cutinases thermostables.

7. Procédé selon l'une quelconque des revendications précédentes, dans lequel la cutinase est une cutinase de *Humicola insolens* ou une cutinase marine PET2.

8. Procédé selon l'une quelconque des revendications précédentes, dans lequel le mélange est chauffé à une température comprise entre 15 et 80 °C, telle qu'entre 15 et 20 °C, 20 et 30 °C, 30 et 40 °C, 40 et 50 °C, 50 et 60 °C, 60 et 70 °C et/ou 70 et 80 °C.

9. Procédé selon l'une quelconque des revendications précédentes, dans lequel la longueur d'onde de l'irradiation micro-ondes coïncide avec la longueur d'onde d'absorption du substrat en polyester.

10. Procédé selon l'une quelconque des revendications précédentes, dans lequel l'irradiation micro-ondes est réalisée à une longueur d'onde comprise entre 1 mm et 100 cm, de préférence entre 1 cm et 50 cm, de préférence entre 2 cm et 10 cm.

11. Procédé selon l'une quelconque des revendications précédentes, dans lequel l'irradiation micro-ondes est réalisée à une puissance comprise entre 1 et 1000 W, telle qu'entre 5 et 100 W, telle qu'entre 10 et 80 W, telle qu'entre 35 et 65 W.

12. Procédé selon l'une quelconque des revendications précédentes, dans lequel :
a. le solvant est un solvant aqueux,
b. le solvant comprend un tampon, tel que le tris (hydroxyméthyl)aminométhane (TRIS), la glycine et/ou le NaOH, et/ou
c. le solvant comprend un solvant aprotique et polaire, tel que le DMSO, tel que de 1 à 20 % de DMSO.

13. Procédé selon l'une quelconque des revendications précédentes, dans lequel le pH du mélange est maintenu entre 5,0 et 11,0, tel qu'entre 6,0 et 10,5, tel qu'entre 6,5 et 10,0, par exemple 7,5 ou 9,0.

14. Procédé selon l'une quelconque des revendications précédentes, dans lequel le mélange est chauffé pendant 1 à 200 heures, tel que pendant 10 à 150 heures, tel que pendant 20 à 100 heures, tel que pendant 25 à 90 heures.

15. Procédé selon l'une quelconque des revendications précédentes, comprenant également une étape de préparation du substrat en polyester :
a. en fournissant un polyester,
b. en nettoyant éventuellement le polyester par lavage avec un détergent et/ou de l'eau,
c. en broyant ou en pulvérisant le polyester afin de réduire la taille des particules pour obtenir des particules de polyester, et
d. en lavant éventuellement les particules de polyester avec un solvant organique, tel que l'éthanol ou le méthanol,
permettant la dépolymérisation du substrat en polyester.
